# EUROPEAN PATENT SPECIFICATION

(11) **EP 1 710 323 B1**
(45) Date of publication and mention of the grant of the patent: **21.09.2011**
(21) Application number: 06250511.0
(22) Date of filing: 31.01.2006
(51) Int. Cl.: C23C 10/60, C23C 18/54, C23C 28/02, C23C 30/00

(54) **Nickel coating**
Nickelbeschichtung
Revêtement de nickel

(30) Priority: 04.04.2005 US 98067
(43) Date of publication of application: 11.10.2006
(73) Proprietor: United Technologies Corporation, Hartford, CT 06101 (US)
(72) Inventor: Hanlon, Thomas R., Colchester, CT 06415 (US)
(74) Representative: Taylor, Adam David

(56) References cited:
- EP-A- 0 346 265
- US-A- 4 167 416
- US-A- 5 494 706
- US-A1- 2004 058 189
- US-B1- 6 200 636

## Description

The invention relates to nickel coatings. More particularly, the invention relates to electroless nickel boron plating.

U.S. Patent 6,756,134 discloses a zinc-diffused nickel alloy coating for corrosion and heat protection. Nickel and zinc layers are successively electroplated atop a substrate and then thermally diffused.

Separately, electroless nickel (EN) coatings have been used for purposes including wear and corrosion protection. For example, EP-A-0346265 discloses electroless plating compositions which produce a boron containing nickel coating. Electroless nickel phosphorous (ENP or e-NiP) plating may be achieved with use of sodium hypophosphite as a reducing agent. Electroless nickel boron (ENB or e-NiB) plating may be achieved with use of a compound such as sodium borohydride or dimethylaminoborane as the reducing agent. E-NiB coatings may have advantageous wear resistance properties relative to e-NiP coatings, but may not provide advantageous corrosion resistance.

US 5,494,706 discloses a method as set out in the preamble of claim 1.

The invention provides a method as claimed in claim 1, and a coated article as claimed in claim 13.

A Ni-based first material is applied directly atop substrate by electroless NiB plating. A Zn-based second material is applied directly atop the first material. One or more components of at least one of the first and second materials are diffused into the other.

Certain preferred embodiments of the invention will now be described by way of example only and with reference to the accompanying drawings in which:

FIG. 1 is a flow chart of an exemplary coating process.

FIG. 2 is an electron microprobe scan of a cross-section of a two layer Zn atop e-NiB coating on an Fe substrate before diffusion.

FIG. 3 is an enlarged view of the coating of FIG. 2.

FIG. 4 is a view of the coating of FIG. 3 after thermally induced diffusion of the coating layers.

FIG. 5 is a zinc x-ray map of the coating of FIG. 4.

FIG. 6 is a nickel x-ray map of the coating of FIG. 4.

FIG. 7 is a line scan of the coating of FIG 3, showing Ni, B, and Zn contents.

Like reference numbers and designations in the various drawings indicate like elements.

Corrosion resistance problems of e-NiB coatings are believed due to a micro-porous, columnar structure. To enhance the corrosion resistance it was postulated that a layer of zinc could be applied to the surface of the e-NiB-coated substrate via electroplating, slurry packing, or other method and then interdiffused with the NiB layer.

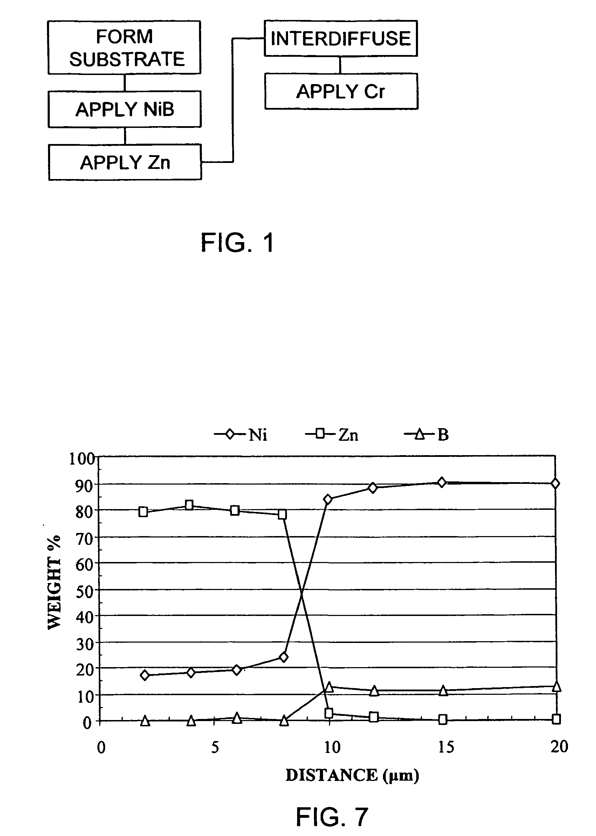

In an illustrative process outlined in FIG. 1, a substrate may be formed. Exemplary substrates are titanium-based (e.g., titanium or a titanium alloy), formed by forging and/or machining. Exemplary substrates are for parts used in the aerospace industry (e.g., gas turbine engine compressor blades, vanes, and other components). After any cleaning or other treatment, a Ni-based first material is applied directly atop the substrate. The application is to a first thickness at a first location. This is an essentially uniform first thickness over a majority of a surface of the substrate. The first thickness may be substantially less than a local substrate thickness. The first thickness is e.g., 10-1000µm. This thickness will be purpose dependent. For space-filling (e.g., in dimensional restoration) thicknesses of 500µm to well in excess of 1000µm may be appropriate. For wear and corrosion resistance, 10-100µm may be sufficient. For mere corrosion protection, much thinner coatings are possible. The first material is NiB and, as applied, may comprise 1-15% B, more narrowly, 1-10%. 1-5% may be appropriate for a low-mid-B coating and/or 9-14% for a high-B coating.

After any cleaning and/or other treatment, a Zn-based second material is applied directly atop the first material. The application is to a second thickness at the first location. This is an essentially uniform second thickness over a majority of a surface of the substrate. The second thickness is less than the first thickness, but at least 4 µm. An exemplary second thickness is 5-20µm.

After any cleaning and/or other treatment, including potential application of one or more additional layers, heating at an appropriate temperature causes one or more components of at least one of the first and/or second materials to diffuse into the other. This diffusion creates a layer of a ZnNi alloy. The heating may be performed in an ambient atmosphere or inert atmospheres. Vacuum or reactive atmospheres are also possible. Exemplary heating is to a temperature of at least 300°C for a duration of at least half an hour, more specifically 300-500°C for 0.5-3 hours. The diffusing may be effective to provide a degree of diffusion at least as high as degrees of diffusion obtained by heating to a temperature of 450°C for a duration of 1.5 hours or 300°C for two hours.

The diffusion treatment may form an outer/outboard/upper region of essentially 10-25% Ni throughout a depth of at least 50% of said second thickness. The depth may be 100-200% of said second thickness and may span the original junction/boundary between the first and second materials. More broadly, the Zn content is at least 50% and the Ni content is at least 10% in the region. The Zn content may be at least 70%.

Inboard/below a shallow transition region, there may be a region of the essentially unchanged first material. For an NiB material, this base region may have an Ni content of at least 50% and a B content of at least 1%. An exemplary thickness is at least 10µm, although there is substantial potential upside. The Ni content may be at least 80% and the B content may be at least 5% for a mid-high B material. There may be some B diffusion, but the content in the diffused region may be substantially less than that in the base region (e.g., less than one fifth).

According to claim 1, there is a further post-diffusion. If to be performed at elevated temperature, there may be an overlap with the diffusion. According to claim 1 a Cr-based third material is applied after at least a major portion of the diffusing. An exemplary finish coating is a Cr-VI- or, more preferably, a Cr-III-based conversion coating applied after the diffusion and serving to further enhance the anti-corrosion properties of the diffused material.

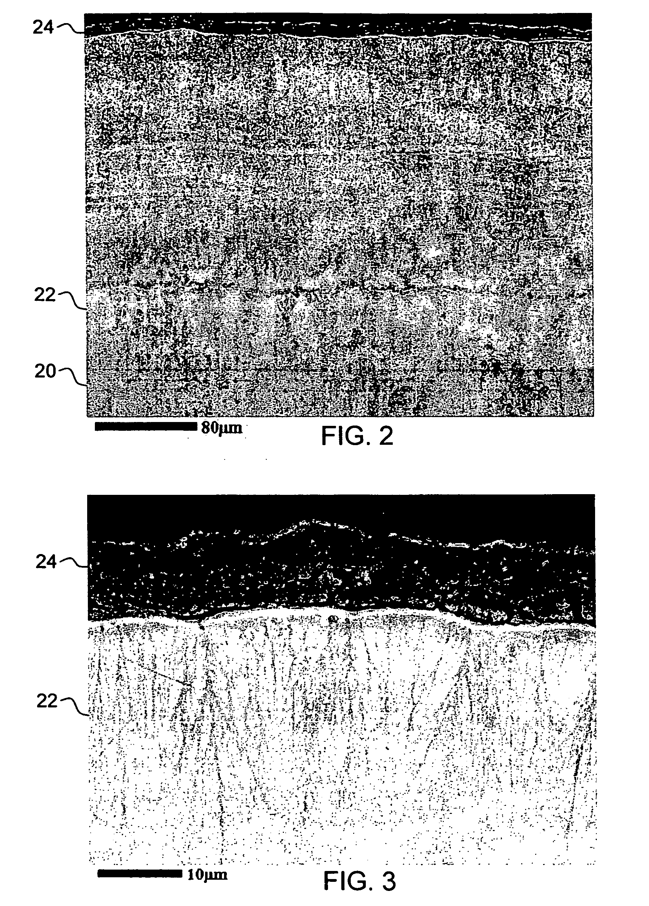

In a test example, only the first and second materials are applied, followed by diffusion and without additional treatments. FIGS. 2 and 3 show a steel test substrate 20 after application of an e-NiB coating 22 and subsequent electroplating with a zinc coating 24. The exemplary NiB coating consists essentially of the nickel and boron and is fairly boron-rich, with a boron content of approximately 10% (all percentages by weight unless indicated otherwise). A thickness of the exemplary coating 22 is about 240µm. The exemplary zinc coating 24 is electroplated zinc. A thickness of the exemplary coating 24 is about 10µm.

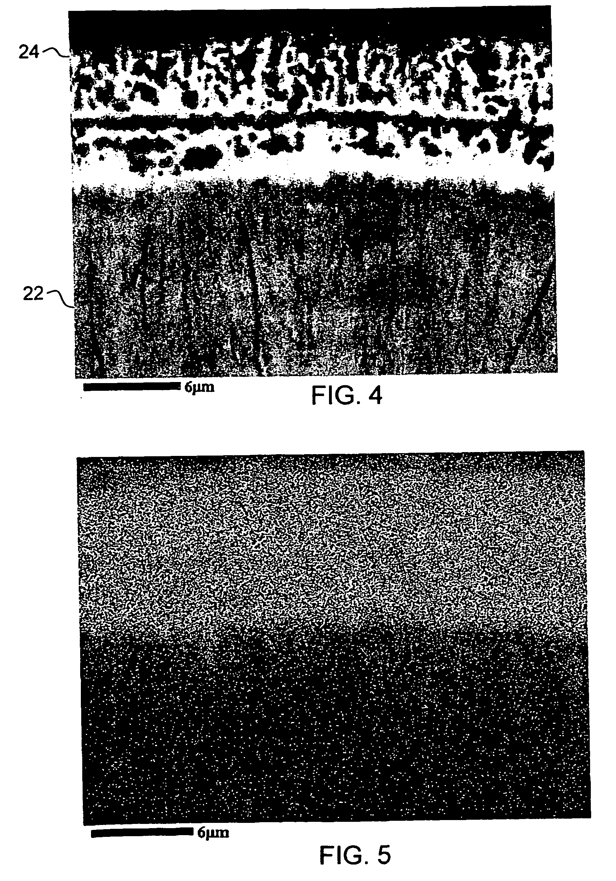

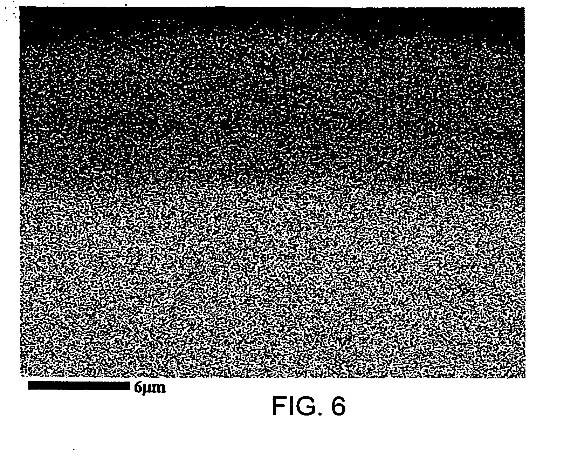

To cause the diffusion, the exemplary substrate was placed in an air oven at 454°C (850°F) for two hours. The interdiffused coating is shown in FIG. 4. The original NiB/Zn interface can be seen as a dark line through the lighter colored layer that has dark spots peppered throughout. The interface is similarly visible in the x-ray maps of FIGS. 5 and 6.

FIG. 7 shows line scan data indicating that Zn diffused about 4µm inward into the e-NiB layer and that Ni, but not B, diffused outward throughout the Zn layer resulting in a layer that is essentially a ZnNi alloy with a near constant 18% Ni by weight. Corrosion resistance is enhanced due to the presence of sacrificial Zn (as ZnNi alloy) at or near (e.g., if a further coating layer is applied) the outer surface of the part. An intermediate transition region is relatively thin. The appearance of concentrations totaling other than 100% is due to sampling considerations and use of raw unnormalized data.

Coating applications include those of existing e-NiB coatings on the one hand and electroplated diffused Ni/Zn coatings (e.g., of U.S. Patent 6,756,134) on the other hand. Relative to the latter, the present coatings' use of e-NiB offers the advantage of a harder and more highly conformal nickel layer than one obtained by standard electroplating.

One or more embodiments of the present invention have been described. Nevertheless, it will be understood that various modifications may be made without departing from the scope of the invention. For example, part operating conditions will influence any particular implementation. A wide variety of articles may use the coating and a wide variety of substrate materials may be used. These materials include metals (e.g., Ti-, Fe-, and Al-based) and non-metals (e.g., plastics and composites which may further include a basal metallic coating such as Au to permit overplating with the e-NiB). Accordingly, other embodiments are within the scope of the following claims.

## Claims

1. A method for coating comprising:
applying a Ni based first material (22) directly atop a substrate (20);
applying a Zn based second material (24) directly atop the first material; and
diffusing one or more components of at least one of the first and second materials (22, 24) into the other;
**characterised in that** the first material (22) is applied by electroless NiB plating, and **in that** the method comprises applying a Cr-based third material after at least a major portion of the diffusing.

2. The method of claim 1, wherein:
the diffusing comprises heating to a temperature of at least 300°C for a duration of at least one half hour.

3. The method of claim 1 or 2, wherein:
the diffusing comprises heating to a temperature of 300-500°C for a duration of 0.5-3 hours.

4. The method of claim 1, 2 or 3, wherein:
the step of diffusing comprises heating to a temperature of at least 400°C for a duration of at least 1 hour.

5. The method of any preceding claim, wherein:
the diffusing is effective to provide a degree of diffusion at least as high as a degree of diffusion obtained by heating to a temperature of 450°C for a duration of 1.5 hours.

6. The method of any of claims 1 to 3, wherein:
the diffusing is effective to provide a degree of diffusion at least as high as a degree of diffusion obtained by heating to a temperature of 300°C for a duration of 2.0 hours.

7. The method of any preceding claim, wherein:
the substrate is Ti-based.

8. The method of any preceding claim, wherein:
the applying of the first material (22) comprises applying to a first thickness of 50-500µm at a first location; and
the applying of the second material (24) comprises applying to a second thickness of 5-20µm at said first location.

9. The method of any preceding claim, wherein:
the applying of the first material (22) comprises applying to an essentially uniform first thickness; and
the applying of the second material (24) comprises applying to an essentially uniform second thickness less than the first thickness.

10. The method of any preceding claim, wherein:
the first material (22), as applied, comprises 1-10% B.

11. The method of any preceding claim, wherein:
the first material (22), as applied, comprises 2-6% B.

12. The method of any preceding claim, wherein:
the diffusing forms a region of essentially 10-25% Ni throughout a depth of at least 50% of said second thickness.

13. A coated article comprising:
a substrate (20); and
a coating system (22, 24) having a compositional gradient having:
a first region (22) having:
a Ni content of at least 50%;
a B content of at least 1%; and
a thickness of at least 10µm; and ,
a second region (24) outboard of the first region and having:
a Zn content of at least 50%;
a Ni content of at least 10%; and
a thickness of at least 4µm.

14. The article of claim 13 wherein:
the substrate (20) is Ti based.

15. The article of claim 13 or 14, wherein: the first region Ni content is at least 80 %;
the first region (22) B content is at least 5%;
the second region (24) Zn content is at least 70%;
the second region (24) has a B content less than one fifth of the first region B content; and
the coating system(22, 24) has a transition region between the first and second regions (22, 24) having a thickness of no more than 10µm.

## Patentansprüche

1. Beschichtungsverfahren aufweisend:
Auftragen eines ersten Materials (22) auf Ni-Basis direkt auf ein Substrat (20);
Auftragen eines zweiten Materials (24) auf Zn-Basis direkt auf das erste Material; und
Diffundieren einer oder mehrerer Komponenten des ersten Materials (22) und/oder des zweiten Materials (24) in das andere;
**dadurch gekennzeichnet, dass** das erste Material (22) durch stromloses Plattieren von NiB aufgetragen wird, und dadurch, dass das Verfahren ein Auftragen eines dritten Materials auf Cr-Basis nach mindestens einem Großteil der Diffusion aufweist.

2. Verfahren nach Anspruch 1, bei dem:
die Diffusion ein Erhitzen auf eine Temperatur von mindestens 300°C für eine Dauer von mindestens einer halben Stunde aufweist.

3. Verfahren nach Anspruch 1 oder 2, bei dem:
die Diffusion ein Erhitzen auf eine Temperatur von 300-500°C für eine Dauer von 0,5-3 Stunden aufweist.

4. Verfahren nach Anspruch 1, 2 oder 3, bei dem:
der Diffusionsschritt ein Erhitzen auf eine Temperatur von mindestens 400°C für eine Dauer von mindestens 1 Stunde aufweist.

5. Verfahren nach einem vorangehenden Anspruch, bei dem:
die Diffusion dahingehend wirkt, einen Diffusionsgrad zu schaffen, der mindestens so hoch ist wie ein Diffusionsgrad, der durch Erhitzen auf eine Temperatur von 450°C für eine Dauer von 1,5 Stunden erhalten wird.

6. Verfahren nach einem der Ansprüche 1 bis 3, bei dem:
die Diffusion dahingehend wirkt; einen Diffusionsgrad zu schaffen, der mindestens so hoch ist wie ein Diffusionsgrad, der durch Erhitzen auf eine Temperatur von 300°C für eine Dauer von 2,0 Stunden erhalten wird.

7. Verfahren nach einem vorangehenden Anspruch, bei dem:
das Substrat auf Ti basiert.

8. Verfahren nach einem vorangehenden Anspruch, bei dem:
das Auftragen des ersten Materials (22) ein Auftragen in einer ersten Dicke von 50-500 µm an einer ersten Stelle aufweist; und
das Auftragen des zweiten Materials (24) ein Auftragen in einer zweiten Dicke von 5-20 µm an der ersten Stelle aufweist.

9. Verfahren nach einem vorangehenden Anspruch, bei dem:
das Auftragen des ersten Materials (22) ein Auftragen in einer im wesentlichen gleichmäßigen ersten Dicke aufweist; und
das Auftragen des zweiten Materials (24) ein Auftragen in einer im wesentlichen gleichmäßigen zweiten Dicke, die geringer ist als die erste Dicke, aufweist.

10. Verfahren nach einem vorangehenden Anspruch, bei dem:
das erste Material (22), wie aufgetragen, 1-10% B aufweist.

11. Verfahren nach einem vorangehenden Anspruch, bei dem:
das erste Material (22), wie aufgetragen, 2-6% B aufweist.

12. Verfahren nach einem vorangehenden Anspruch, bei dem:
die Diffusion einen Bereich von im wesentlichen 10-25% Ni überall bis hin zu einer Tiefe von mindestens 50% der zweiten Dicke bildet.

13. Beschichteter Gegenstand aufweisend:
ein Substrat (20); und
ein Beschichtungssystem (22, 24) mit einem Zusammensetzungsgradienten mit:
einem ersten Bereich (22) mit:
einem Ni-Gehalt von mindestens 50%;
einem B-Gehalt von mindestens 1 %; und
einer Dicke von mindestens 10 µm; und
einem zweiten Bereich (24) außerhalb des ersten Bereichs und mit:
einem Zn-Gehalt von mindestens 50%;
einem Ni-Gehalt von mindestens 10%; und
einer Dicke von mindestens 4 µm.

14. Gegenstand nach Anspruch 13, bei dem:
das Substrat (20) auf Ti basiert.

15. Gegenstand nach Anspruch 13 oder 14, bei dem:
der Ni-Gehalt des ersten Bereichs mindestens 80% beträgt;
der B-Gehalt des ersten Bereichs (22) mindestens 5% beträgt;
der Zn-Gehalt des zweiten Bereichs (24) mindestens 70% beträgt;
der zweite Bereich (24) einen B-Gehalt hat, der geringer ist als ein Fünftel des B-Gehalts des ersten Bereichs; und
das Beschichtungssystem (22, 24) einen Übergangsbereich zwischen dem ersten Bereich (22) und dem zweiten Bereich (24) mit einer Dicke von nicht mehr als 10 µm hat.

## Revendications

1. Procédé de revêtement, comprenant les étapes suivantes :
appliquer un premier matériau à base de Ni (22) directement en haut d'un substrat (20) ;
appliquer un deuxième matériau à base de Zn (24) directement en haut du premier matériau ; et
diffuser un ou plusieurs composants d'au moins l'un des premier et deuxième matériaux (22, 24) dans l'autre ;
**caractérisé en ce que** le premier matériau (22) est appliqué par plaquage anélectrolytique NiB et **en ce que** le procédé comprend l'application d'un troisième matériau à base de Cr après au moins une partie majeure de la diffusion.

2. Procédé selon la revendication 1, dans lequel :
la diffusion comprend le chauffage à une température d'au moins 300 °C pendant une durée d'au moins une demi-heure.

3. Procédé selon la revendication 1 ou 2, dans lequel :
la diffusion comprend le chauffage à une température de 300 à 500 °C pendant une durée de 0,5 à 3 heures.

4. Procédé selon la revendication 1, 2 ou 3, dans lequel :
l'étape de diffusion comprend le chauffage à une température d'au moins 400 °C pendant une durée d'au moins 1 heure.

5. Procédé selon l'une quelconque des revendications précédentes, dans lequel :
la diffusion est efficace pour assurer un degré de diffusion au moins aussi élevé qu'un degré de diffusion obtenu par chauffage à une température de 450 °C pendant une durée de 1,5 heure.

6. Procédé selon l'une quelconque des revendications 1 à 3, dans lequel :
la diffusion est efficace pour assurer un degré de diffusion au moins aussi élevé qu'un degré de diffusion obtenu par chauffage à une température de 350 °C pendant une durée de 2,0 heures.

7. Procédé selon l'une quelconque des revendications précédentes, dans lequel :
le substrat est à base de Ti.

8. Procédé selon l'une quelconque des revendications précédentes, dans lequel:
l'application du premier matériau (22) comprend l'application à une première épaisseur de 50 à 500 µm à un premier emplacement ; et
l'application du deuxième matériau (24) comprend l'application à une deuxième épaisseur de 5 à 20 µm audit premier emplacement.

9. Procédé selon l'une quelconque des revendications précédentes, dans lequel :
l'application du premier matériau (22) comprend l'application à une première épaisseur essentiellement uniforme ; et
l'application du deuxième matériau (24) comprend l'application à une deuxième épaisseur essentiellement uniforme, inférieure à la première épaisseur.

10. Procédé selon l'une quelconque des revendications précédentes, dans lequel :
le premier matériau (22), tel qu'appliqué, comprend 1 à 10 % de B.

11. Procédé selon l'une quelconque des revendications précédentes, dans lequel :
le premier matériau (22), tel qu'appliqué, comprend 2 à 6 % de B.

12. Procédé selon l'une quelconque des revendications précédentes, dans lequel :
la diffusion forme une région d'essentiellement 10 à 25 % de Ni sur une profondeur d'au moins 50 % de ladite deuxième épaisseur.

13. Article revêtu, comprenant :
un substrat (20) ; et
un système de revêtement (22, 24) ayant un gradient compositionnel comportant :
une première région (22) ayant :
une teneur en Ni d'au moins 50 % ;
une teneur en B d'au moins 1 % ; et
une épaisseur d'au moins 10 µm ; et
une deuxième région (24) extérieure à la première région et ayant :
une teneur en Zn d'au moins 50 % ;
une teneur en Ni d'au moins 10 % ; et
une épaisseur d'au moins 4 µm.

14. Article selon la revendication 13, dans lequel :
le substrat (20) est à base de Ti.

15. Article selon la revendication 13 ou 14, dans lequel :
la teneur en Ni de la première région est d'au moins 80 % ;
la teneur en B de la première région (22) est d'au moins 5 % ;
la teneur en Zn de la deuxième région (24) est d'au moins 70 % ;
la deuxième région (24) présente une teneur en B inférieure à un cinquième de la teneur en B de la première région ; et
le système de revêtement (22, 24) comporte une région de transition entre les première et deuxième régions (22, 24) d'une épaisseur non supérieure à 10 µm.
